# EUROPEAN PATENT SPECIFICATION

(11) **EP 1 371 957 B1**
(45) Date of publication and mention of the grant of the patent: **09.01.2008**
(21) Application number: 02291455.0
(22) Date of filing: 11.06.2002
(51) Int. Cl.: G01J 3/28, G01J 3/06

(54) **Spectrometer**
Spektrometer
Spectromètre

(43) Date of publication of application: 17.12.2003
(73) Proprietor: Jobin Yvon S.A.S., 91160 Longjumeau (FR)
(72) Inventor: Ukon, Juichiro, 75013 Paris (FR)
(74) Representative: Catherine, Alain

(56) References cited:
- EP-A- 0 502 495
- EP-A- 0 800 066
- JP-A- 57 153 227
- US-A- 4 692 883

## Description

This invention relates to a spectrometer.

Usually, a spectrometer consists of an orientable grating that receives a parallel beam from a light source whose spectrum is to be measured.

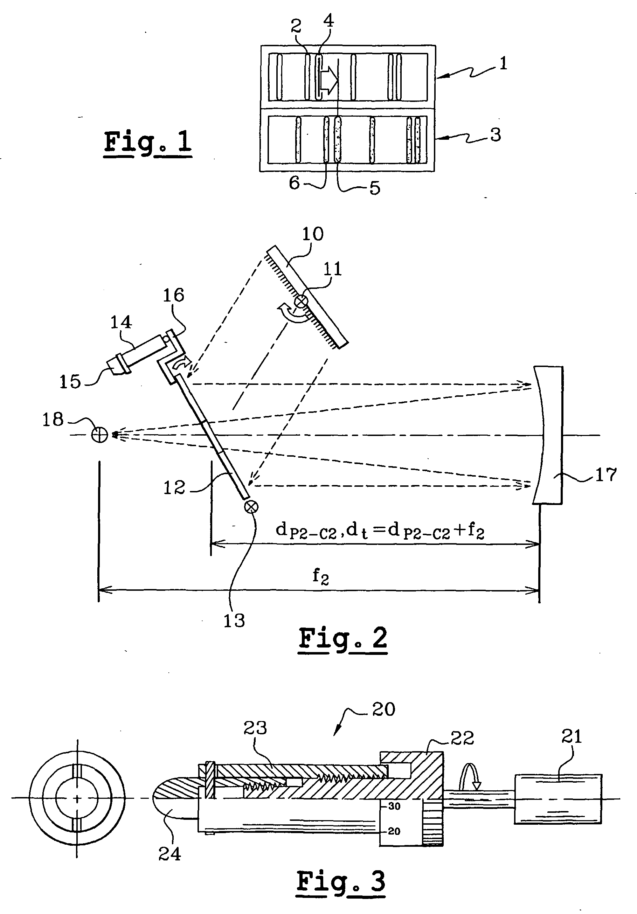

Focusing means select part 1 or selected lines 2 of the diffracted beam and direct them to a detector (Figure 1). This detector measures the power of the selected spectrum 1 and means are needed for measuring the wavelength of the selected lines 2. It is usual that a grating rotating system provides the wavelength measure.

Typically, the grating rotating system uses a stepper motor to drive the grating. A predefined number of steps is fed to the motor to move the grating so that a wavelength is selected. The mechanism that moves the grating should show no backlash and no slipping. A very high precision mechanism is therefore required that is expensive to be assembled as well as to be adjusted.

A worm-wheel gear can also be used, however this still remains costly.

The object of the invention is to provide a wavelength measuring device within a spectrometer that will give a very high accuracy on the measure, being simple and providing a fast move of the grating.

Hence, the spectrometer according to the invention comprises means for producing a parallel beam from a light source whose spectrum is to be measured and directing it to an orientable grating which produces a diffracted beam, means for focusing said diffracted beam on a detector which measures the power of a selected line of the spectrum, said means comprising a reflector, means for measuring the wavelength of said selected line and a treatment unit.

In such a device, according to the invention, the means for measuring the wavelength comprise a reference light source producing a reference spectrum that is stored in the treatment unit, comparison means for comparing the wavelength of the selected line of the reference spectrum with the stored reference spectrum allowing to compute a spectral shift between said stored reference spectrum and said measured reference spectrum, means for rotating the grating providing a coarse positioning of the diffracted beam relatively to the detector and measuring the grating position allowing the generation of a reference spectrum, and means for rotating the reflector providing a fine positioning of the diffracted beam relatively to the detector and measuring the reflector position, in order to minimize the spectral shift.

The exact spectral positions will be obtained using the reference source and the fine positioning mechanism.

In different embodiments, this spectrometer presents the following features :
- the means for rotating the grating is a stepper motor,
- the means for rotating the reflector is a piezo-ceramic stack,
- the means for rotating the reflector is a differential screw,
- the detector is a solid state-detector.

The invention also concerns a process for tuning a spectrometer intended for measuring a light source in a selected spectral range, said spectrometer comprising a detector array and a treatment unit.
According to the invention,
- a reference light source is used, said reference light source having a reference spectrum stored in the treatment unit and obtained by diffraction of it on said detector array so as to acquire the wavelength position on the detector array,
- the reference light source is measured in the selected spectral range, giving a reference spectrum, said measure of the reference spectrum in the selected spectral range is done by coarse positioning of the measured spectrum relatively to the detector, with a grating
- a mutual pattern to the stored and measured spectra of the reference light source is searched for in said selected spectral range via a cross-correlation procedure, a pattern matching value D being issued,
- a spectral shift value between said mutual pattern of each spectrum is calculated,
- said shift value is used for fine positioning of the measured reference spectrum on the detector, with a reflector until the cross-correlation procedure gives the highest value D.

In different preferred embodiments, this process presents the following features:
- the measure of the reference spectrum in the selected spectral range is done by coarse positioning of the measured spectrum relatively to the detector,
- coarse positioning is provided by a stepper motor acting on a grating orientation,
- fine positioning is obtained by a piezo-ceramic stack acting on a reflector,
- fine positioning is obtained by a differential screw acting on a reflector.
   The invention further concerns a process for measuring a light source in a selected spectral range with a spectrometer comprising a detector array. According to the invention,
- a reference light source is used,
- the spectrometer is first tuned in the selected spectral range using the process for tuning a spectrometer, object of claims 6 to 10,
- the light source to be measured is substituted to the reference light source,
- the light source is measured in the said selected spectral range.

The invention will be further described in relation to the drawings in which :
- figure 1 is a representation of the measured spectrum of the reference light source relatively to the stored reference spectrum,
- figure 2 is a schematic representation of the device of the invention,
- figure 3 is a representation of a differential screw.

The device of the invention aims to measure the spectrum of a light source in a selected spectral range.

The spectrometer comprises a diffraction grating 10 which can be rotated around an axis 11 by a stepper motor. It further comprises a mirror 12 which can be rotated around an axis 13 by displacement means 14 placed between a fixed plot 15 and an arm 16 to which the mirror 12 is connected (Figure 2).

Displacement means 14 can have different embodiments, as long as they provide an accurate control on the mirror 12 orientation.

First embodiment of this displacement means is 14 a stack of piezo-ceramics.

Second embodiment is a differential screw.

Focusing means 17 focus a selected line of the diffracted beam on a detector 18.

This line that is selected in the diffracted beam depends both on the orientation of the grating 10 and on the orientation of the mirror 12. The stepper motor acting on the grating 10 provides a coarse positioning of the light source spectrum on said detector 18.

Depending on the quality of the coarse positioning means, the position of the selected line 2 may be shifted on the detector 18. Therefore, before measuring said spectrum, the spectrometer is first used with a reference light source whose spectrum 3 is known. This reference light source has a unique spectrum 3 that is stored. Said spectrum 3 is scanned by the rotating diffraction grating 10 and the orientation of the grating 10 for each of the wavelength array is stored.

The reference light source is chosen such that the reference spectrum being measured 1 contains at least one line 2, 4-6 of the stored reference spectrum 3 in the selected spectral range. The intensities of these lines 2, 4-6 may be slightly different but their respective positions are the same.

Depending on the quality of the coarse positioning means, the position of a line 4 of the reference spectrum in the selected spectral range, mutual to the reference 1 and stored 3 spectra, may be shifted with respect to the corresponding line 5 in the stored spectrum 3.

A comparison between both spectra 1, 3 is hence done through a cross-correlation procedure with the purpose to cancel the spectral shift (offset) observed between the stored spectrum 3 of the reference light source and its measured reference spectrum 1.

This procedure compares patterns of both spectra 1, 3 and gives a maximum value when two patterns 4, 5 are in match. This match is obtained by comparing and shifting the recorded spectrum of either source with respect to the other until the cross-correlation procedure gives a maximum value D.

The shift in spectral position of the mutual pattern between both spectra, calculated using this procedure, is corrected by fine positioning using the displacement means 14. The fine positioning is achieved when the measured reference line is focused on the column position of the detector 18 which is calculated from the stored spectrum 3 of the reference light source.

Each step of the continuous positioning of the measured spectrum brings a new cross-correlation value d. The procedure of fine positioning finishes when said value d reaches the maximum value D. The fine positioning is done by the displacement means in close-loop control.

Fine positioning can be obtained by the orientation of the mirror 12 using the displacement means.

Coarse positioning using the stepper motor can be made at a high speed and the fine positioning by the displacement means 14 will provide the accuracy that is needed.

Once the spectrometer has been tuned using the process described above, the light source to be measured is substituted to the reference light source and the light source is measured in the said selected spectral range.

Best results have been obtained using an Hg-Ne reference light source which emits hundreds of lines over the measurement range from 185 to 800 nm.

The stacked piezo-ceramic device which can be used for rotating the mirror 12 has a length that can be controlled by applying a voltage.

Stacked piezo-ceramic devices generating 10 micrometers length variation when applying hundred volts are available and can provide resolution of 1000.

In order to prevent creeping, it is useful to use a feedback control signal by sensing the length and the position of the stacked extremity.

When using a differential screw 20, this can be commanded by a stepper motor 21.

The differential screw 20 is a screw or knob 22 on which there are two different thread pitches. In Figure 3, the knob is connected to the motor and can rotate. The cylinder 23 was mechanically fixed. On the shaft of the knob 22, two different pitches of the thread were engraved, for example one has 0.5 mm pitch, and the other has 0.45 mm pitch both having the same direction. When the shaft rotates or turns, the head 24 moves relatively to the cylinder 23 the difference of the pitch. So in our example, the movement is 0.05 mm for each rotation of the shaft. When the motor is a stepper motor 21 and 2000 steps correspond to 0.5 mm, a step corresponds to a 0.025 micron movement of the head 24.

As stepper motor device, the combination of 5 phase motors with microstep drive can be used having a resolution of 100,000 pulses per rotation.

In a particular embodiment of the device, the following values of parameters have been used :

| | |
|---|---|
| Focal length of the 2^{nd} concave: | f₂ = 500 mm |
| Optical path from the 2^{nd} plane mirror to the focus : | dₜ = 900 mm |
| Resolution of the stepper motor : | P = 25,000 pulses per rotation |
| Image shift on the focal plane by the motor rotation: | Sp = f2 sin[(360°/P)/2] |
| | = 62.8 µm/pulse |
| Distance between the action point of PZT and the mirror tilt axis : | Lₜ = 100 mm |
| Needed length change of PZT to cover the image shift by the grating rotation : | Iₚ = 1/2 x Lₜ (Sp / dₜ) |
| | = 3.49 µm |

This spectrometer provides accurate measures, it is reliable and its cost is kept very low.

## Claims

1. Spectrometer comprising :
means for producing a parallel beam from a light source whose spectrum is to be measured and directing it to an orientable grating (10) which produces a diffracted beam,
means for focusing said diffracted beam on a detector (18) which measures the power of a selected tine of the spectrum, said means comprising a reflector (12),
means for measuring the wavelength of the selected line,
a treatment unit,
wherein :
the means for measuring the wavelength comprise a reference light source producing a reference spectrum (3) that is stored in the treatment unit,
means for rotating the grating (10) providing a coarse positioning of the diffracted beam relatively to the detector (18) and measuring the grating (10) position, allowing the generation of a reference spectrum (1),
comparison means for comparing the wavelength of the selected line (4) of the reference spectrum (1) with the stored reference spectrum (3), allowing to compute a spectral shift between said stored reference spectrum (3) and said measured reference spectrum (1),
means for rotating the reflector (12) providing a fine positioning of the diffracted beam relatively to the detector (18) and measuring the reflector position in order to minimize the spectral shift.

2. Spectrometer according to claim 1, wherein the means for rotating the grating (10) is a stepper motor.

3. Spectrometer according to claims 1 or 2, wherein the means for rotating the reflector (12) is a piezo-ceramic stack.

4. Spectrometer according to claims 1 or 2, wherein the means for rotating the reflector (12) is a differential screw.

5. Spectrometer according to any of claims 1 to 4, wherein the detector (18) is a solid state-detector.

6. Process for tuning a spectrometer intended for measuring a light source in a selected spectral range, said spectrometer comprising a detector (18) array and a treatment unit wherein :
- a reference light source is used, said reference light source having a reference spectrum (3) stored in the treatment unit and obtained by diffraction of it on said detector (18) array so as to acquire the wavelength position on the detector (18) array,
- the reference light source is measured in the selected spectral range giving a reference spectrum (1),
- said measure of the reference spectrum (1) in the selected spectral range is done by coarse positioning of the measured spectrum (1) relatively to the detector (18), with a grating (10),
- a mutual pattern to the stored (3) and measured (1) spectra of the reference light source is searched for in said selected spectral range via a cross-correlation procedure, a pattern matching value D being issued,
- a spectral shift value between said mutual pattern of each spectrum is calculated,
- said shift value is used for fine positioning of the measured reference spectrum (1) on the detector (18), with a reflector (12), until the cross-correlation procedure gives the highest value D.

7. Process according to claim 6, wherein coarse positioning is provided by a stepper motor acting on a grating (10) orientation.

8. Process according to claim 6 or 7, wherein said fine positioning is obtained by a piezo-ceramic stack acting on a reflector (12).

9. Process according to claim 6 or 7, wherein said fine positioning is obtained by a differential screw acting on a reflector (12).

10. Process for measuring a light source in a selected spectral range with a spectrometer comprising a detector (18) array wherein:
- a reference light source is used,
- the spectrometer is first tuned in the selected spectral range using the process for tuning a spectrometer according to any one of claims 6 to 9,
- the light source to be measured is substituted to the reference light source,
- the light source is measured in the said selected spectral range.

## Patentansprüche

1. Spektrometer, das Folgendes umfasst:
ein Mittel zum Erzeugen eines Parallelstrahls von einer Lichtquelle, deren Spektrum zu messen ist, und zu dessen Leiten zu einem verstellbaren Gitter (10), wodurch ein gebeugter Strahl erzeugt wird,
ein Mittel zum Bündeln des gebeugten Strahls auf einen Detektor (18), der die Energie einer ausgewählten Linie des Spektrums misst, wobei das Mittel einen Reflektor (12) umfasst,
ein Mittel zum Messen der Wellenlänge der ausgewählten Linie,
eine Verarbeitungseinheit,
wobei:
das Mittel zum Messen der Wellenlänge eine Referenzlichtquelle umfasst, die ein Referenzspektrum (3) erzeugt, das in der Verarbeitungseinheit gespeichert wird,
ein Mittel zum Drehen des Gitters (10), das eine Grobpositionierung des gebeugten Strahls verhältnismäßig zum Detektor (18) bereitstellt, und zum Messen der Position des Gitters (10), wodurch die Erzeugung eines Referenzspektrums (1) ermöglicht wird,
ein Vergleichsmittel zum Vergleichen der Wellenlänge der ausgewählten Linie (4) des Referenzspektrums (1) mit dem gespeicherten Referenzspektrum (3), wodurch das Berechnen einer Spektralverschiebung zwischen dem gespeicherten Referenzspektrum (3) und dem gemessenen Referenzspektrum (1) ermöglicht wird,
ein Mittel zum Drehen des Reflektors (12), das eine Feinpositionierung des gebeugten Strahls verhältnismäßig zum Detektor (18) bereitstellt, und die Reflektorposition zum Minimieren der Spektralverschiebung misst.

2. Spektrometer nach Anspruch 1, wobei das Mittel zum Drehen des Gitters (10) ein Schrittmotor ist.

3. Spektrometer nach Anspruch 1 oder 2, wobei das Mittel zum Drehen des Reflektors (12) eine piezokeramische Baugruppe ist.

4. Spektrometer nach Anspruch 1 oder 2, wobei das Mittel zum Drehen des Reflektors (12) eine Differentialschraube ist.

5. Spektrometer nach einem der Ansprüche 1 bis 4, wobei der Detektor (18) ein Festkörperdetektor ist.

6. Verfahren zum Einstellen eines Spektrometers, das zum Messen einer Lichtquelle in einem ausgewählten Spektralbereich bestimmt ist, wobei das Spektrometer eine Detektoranordnung (18) und eine Verarbeitungseinheit umfasst, wobei:
- eine Referenzlichtquelle verwendet wird, wobei die Referenzlichtquelle ein Referenzspektrum (3) aufweist, das in der Verarbeitungseinheit gespeichert ist und durch dessen Beugung auf die Detektoranordnung (18) erhalten wird, um die Wellenlängenposition auf der Detektoranordnung (18) zu erfassen,
- die Referenzlichtquelle im ausgewählten Spektralbereich gemessen wird, was ein Referenzspektrum (1) ergibt,
- die Messung des Referenzspektrums (1) im ausgewählten Spektralbereich durch Grobpositionieren des gemessenen Spektrums (1) verhältnismäßig zum Detektor (18) mit einem Gitter (10) ausgeführt wird,
- in dem ausgewählten Spektralbereich über ein Kreuzkorrelationsverfahren nach einem gemeinsamen Muster des gespeicherten (3) und des gemessenen (1) Spektrums der Referenzlichtquelle gesucht wird, wobei ein Musterübereinstimmungswert D ausgegeben wird,
- ein Spektralverschiebungswert zwischen dem gemeinsamen Muster von jedem Spektrum berechnet wird,
- der Verschiebungswert zum Feinpositionieren des gemessenen Referenzspektrums (1) auf dem Detektor (18) mit einem Reflektor (12) verwendet wird, bis das Kreuzkorrelationsverfahren den höchsten Wert D ergibt.

7. Verfahren nach Anspruch 6, wobei die Grobpositionierung durch einen Schrittmotor bereitgestellt wird, der auf die Ausrichtung eines Gitters (10) wirkt.

8. Verfahren nach Anspruch 6 oder 7, wobei die Feinpositionierung durch eine piezokeramische Baugruppe erhalten wird, die auf einen Reflektor (12) wirkt.

9. Verfahren nach Anspruch 6 oder 7, wobei die Feinpositionierung durch eine Differentialschraube erhalten wird, die auf einen Reflektor (12) wirkt.

10. Verfahren zum Messen einer Lichtquelle in einem ausgewählten Spektralbereich mit einem Spektrometer, das eine Detektoranordnung (18) umfasst, wobei:
- eine Referenzlichtquelle verwendet wird,
- das Spektrometer zuerst unter Verwendung des Verfahrens zum Einstellen eines Spektrometers nach einem der Ansprüche 6 bis 9 im ausgewählten Spektralbereich eingestellt wird,
- die Referenzlichtquelle durch die zu messende Lichtquelle ersetzt wird,
- die Lichtquelle in dem ausgewählten Spektralbereich gemessen wird.

## Revendications

1. Spectromètre comprenant :
des moyens destinés à produire un faisceau parallèle à partir d'une source lumineuse dont le spectre doit être mesuré, et à le diriger vers un réseau optique orientable (10) qui produit un faisceau diffracté,
des moyens destinés à focaliser ledit faisceau diffracté sur un détecteur (18) qui mesure la puissance d'une raie sélectionnée du spectre, lesdits moyens comprenant un réflecteur (12),
des moyens destinés à mesurer la longueur d'onde de la raie sélectionnée,
une unité de traitement,
où :
les moyens destinés à mesurer la longueur d'onde comprennent une source lumineuse de référence produisant un spectre de référence (3) qui est stocké dans l'unité de traitement,
des moyens destinés à faire tourner le réseau optique (10), qui réalisent un positionnement approximatif du faisceau diffracté par rapport au détecteur (18) et qui mesurent la position du réseau optique (10), ce qui permet la génération d'un spectre de référence (1),
des moyens de comparaison destinés à comparer la longueur d'onde de la raie sélectionnée (4) du spectre de référence (1) au spectre de référence (3) stocké, ce qui permet de calculer un décalage spectral entre ledit spectre de référence (3) stocké et ledit spectre de référence mesuré (1),
des moyens destinés à faire tourner le réflecteur (12), qui réalisent un positionnement précis du faisceau diffracté par rapport au détecteur (18) et qui mesurent la position du réflecteur afin de minimiser le décalage spectral.

2. Spectromètre selon la revendication 1, dans lequel les moyens destinés à faire tourner le réseau optique (10) sont constitués d'un moteur pas-à-pas.

3. Spectromètre selon la revendication 1 ou la revendication 2, dans lequel les moyens destinés à faire tourner le réflecteur (12) sont constitués d'un empilement de couches piézocéramiques.

4. Spectromètre selon la revendication 1 ou la revendication 2, dans lequel les moyens destinés à faire tourner le réflecteur (12) sont constitués d'une vis différentielle.

5. Spectromètre selon l'une quelconque des revendications 1 à 4, dans lequel le détecteur (18) est un détecteur à semi-conducteurs.

6. Procédé d'accord d'un spectromètre destiné à mesurer une source lumineuse dans un domaine spectral sélectionné, ledit spectromètre comprenant un réseau de détecteurs (18) et une unité de traitement, dans lequel :
- une source lumineuse de référence est utilisée, ladite source lumineuse de référence ayant un spectre de référence (3) stocké dans l'unité de traitement et obtenu par diffraction de celle-ci sur ledit réseau de détecteurs (18), de façon à acquérir la position de la longueur d'onde sur le réseau de détecteurs (18),
- la source lumineuse de référence est mesurée dans le domaine spectral sélectionné, ce qui donne un spectre de référence (1),
- ladite mesure du spectre de référence (1) dans le domaine spectral sélectionné est effectuée par un positionnement approximatif du spectre mesuré (1) par rapport au détecteur (18), au moyen d'un réseau optique (10),
- un diagramme de rayonnement commun entre le spectre stocké (3) et le spectre mesuré (1) de la source lumineuse de référence est recherché dans ledit domaine spectral sélectionné, au moyen d'une procédure de corrélation croisée, une valeur de correspondance spectrale D étant émise,
- une valeur de décalage spectral entre lesdits diagrammes de rayonnement communs des deux spectres est calculée,
- ladite valeur de décalage spectrale est utilisée pour réaliser un positionnement précis du spectre de référence mesuré (1) sur le détecteur (18), avec un réflecteur (12), jusqu'à ce que la procédure de corrélation croisée donne la valeur D la plus élevée.

7. Procédé selon la revendication 6, dans lequel le positionnement approximatif est réalisé par un moteur pas-à-pas agissant sur l'orientation d'un réseau optique (10).

8. Procédé selon la revendication 6 ou la revendication 7, dans lequel ledit positionnement précis est obtenu par un empilement de couches piézocéramiques agissant sur un réflecteur (12).

9. Procédé selon la revendication 6 ou la revendication 7, dans lequel ledit positionnement précis est obtenu par une vis différentielle agissant sur un réflecteur (12).

10. Procédé de mesure d'une source lumineuse dans un domaine spectral sélectionné avec un spectromètre comprenant un réseau de détecteurs (18), dans lequel :
- une source lumineuse de référence est utilisée,
- le spectromètre est tout d'abord accordé dans le domaine spectral sélectionné à l'aide du procédé d'accord d'un spectromètre selon l'une quelconque des revendications 6 à 9,
- la source lumineuse à mesurer est substituée à la source lumineuse de référence,
- la source lumineuse est mesurée dans ledit domaine spectral sélectionné.
